# EUROPÄISCHE PATENTSCHRIFT

(11) **EP 2 740 366 B1**
(45) Veröffentlichungstag und Bekanntmachung des Hinweises auf die Patenterteilung: **01.08.2018**
(21) Anmeldenummer: 13195680.7
(22) Anmeldetag: 04.12.2013
(51) Int. Cl.: A23F 5/24, A23C 9/156

(54) **Verfahren zur Herstellung von kalten Kaffeemilchgetränken**
Method for the preparation of cold coffee milk beverages
Procédé de préparation de boissons café au lait froides.

(30) Priorität: 06.12.2012 CH 27262012
(43) Veröffentlichungstag der Anmeldung: 11.06.2014
(73) Patentinhaber: Innoprax AG, 6045 Meggen (CH)
(72) Erfinder: Kienle, Erich, 6044 Udligenswil (CH)
(74) Vertreter: Schneider Feldmann AG Patent- und Markenanwälte

(56) Entgegenhaltungen:
- EP-A1- 0 546 200
- EP-A2- 2 002 726
- WO-A1-01/11981
- CN-C- 1 324 973
- DE-U1-202008 016 377
- GB-A- 367 517
- GB-A- 1 130 129
- US-A- 4 093 751

## Beschreibung

Die vorliegende Erfindung betrifft ein Verfahren zur Herstellung von kalten Kaffeemilchgetränken, bestehend aus gebrühtem Kaffee und Milch und geschmackgebenden Stoffen.

Vor zirka 8 Jahren wurden in Europa kalte Kaffeemilchgetränke auf dem Markt lanciert. Diese Produkte, die in unterschiedlichsten Behältnissen auf den Markt gebracht wurden, waren anfänglich nicht erfolgreich. Diese Produkte wurden zwar mit pasteurisierter Vollmilch hergestellt, unter Beifügung von Kaffeepulver, Zucker und Wasser und diese Gesamtmischung wurde dann durch entsprechende Temperaturerhöhungsverfahren in meist mehreren Schritten und unter Beifügung von diversen Zusatzstoffen, wie zum Beispiel Stabilisatoren (Natriumphosphate, E339), Säureregulatoren (Kaliumcarbonat), Verdickungsmittel (Karageene, Guarkernmehl) und/oder Emulgatoren (Mono- und Diglyceride von pflanzlichen Speisefettsäuren) haltbar gemacht. Solche kalten Kaffeegetränke sind bei Raumtemperatur mindestens 6 bis 12 Monate haltbar.

Bereits in der Britischen Patentschrift GB 1130129 wird ein Verfahren beschrieben zur Herstellung eines Milchkaffeekonzentrates. Hierbei werden Filterkaffee und Milch unter Beigabe von Zucker oder Saccharin mittels entsprechenden, bekannten Extraktionsverfahren so konzentriert, dass ein Endprodukt mit rund 72% Feststoffe entsteht.

Bereits früher gab es in Büchsen verpackte Kaffeegetränke, die allerdings keine Milchanteile enthielten. Ein solches Kaffeegetränk ist in der US 2620276 beschrieben. Ähnlich wie das erstbeschriebene Verfahren gemäss dem US Patent 5384143 beschreibt auch das US Patent 4093751 ein Verfahren zur Erzeugung von einem Milchkaffeemischgetränk, bei dem wiederum ein Gemisch aus Kaffee und Milch gemeinsam verschiedene Wärmebehandlungsverfahren durchläuft. Sämtliche diesseits bekannte Verfahren bedingen Zusatzstoffe in Form von stabilisierenden Zusätze, da der frisch gebrühte Kaffee beziehungsweise Espresso einen relativ hohen Kaffeesäuregehalt aufweist, (3,4 Dihydroxyzimtsäure). Diese Zusatzstoffe ebenso wie die diversen Wärmebehandlungen des Gemisches führen zu einem sensorisch nur bedingt zufriedenstellenden Resultat.

Weitere Milchkaffeemischgetränke sind beispielsweise aus WO 01/11981 A1, GB 367,517 A, US 4,093,751 A, EP 2 002 726 A2, CN 1324973 C, DE 20 2008 016 377 U1 und GB 1,130,129 A bekannt.

Es ist nunmehr die Aufgabe der vorliegenden Erfindung ein Verfahren zu offenbaren, um ein kaltes Kaffeemischgetränk anbieten zu können, welches, dem heutigen Trend folgend, möglichst unbehandelte und naturbelassene Lebensmittel enthält und ohne Zusatzstoffe, wie Stabilisatoren, Emulgatoren, Säureregulatoren und Bindemittel auskommt.

Diese Aufgabe löst ein Verfahren der eingangs genannten Art, welches die Schritte gemäss Patentanspruch 1 umfasst. Der wesentlichste Gedanke hierbei besteht darin, den gebrühten Kaffee als Komponente B und ein Milchmischgetränk als Komponente A, welches lediglich aus in Fettgehalt standardisierter Milch und wunschgemässen Geschmackstoffen besteht, jeweils separat zu fertigen, separat einer Wärmebehandlung zu unterziehen und danach gekühlt aufzubewahren und erst direkt vor dem Abfüllprozess in eine zum Endverbrauch geeignete Verpackung diese beiden Komponenten, die bei gleicher Lagertemperatur aufbewahrt worden sind, bei dieser Lagertemperatur zusammenzumischen und abzufüllen. Weitere vorteilhafte Verfahrensmerkmale gehen aus den abhängigen Ansprüchen hervor und deren Bedeutung wird in der nachfolgenden Beschreibung unter Bezug auf die anliegende Zeichnung erläutert.

Wie bereits zuvor erwähnt, enthalten alle heute auf dem Markt erhältlichen Milch-Kaffeegemischgetränke Zusatzstoffe, die erforderlich sind, da bei den bisherigen Verfahren die gesamte Mischung aus Milch und Kaffee mit den Geschmackstoffen gleich zu Beginn fertig zusammengemischt werden und erst nachfolgend die Erhitzungsprozesse stattfinden. Für den Erhitzungsprozess ist es aber erforderlich, das Milchkaffeegemisch zu stabilisieren, beziehungsweise um eine hohe Haltbarkeit zu erreichen, zu homogenisieren. Hierzu müssen die erwähnten Zusatzstoffe, wie Stabilisatoren, Säureregulatoren, Verdickungsmittel oder Emulgatoren beigefügt werden.

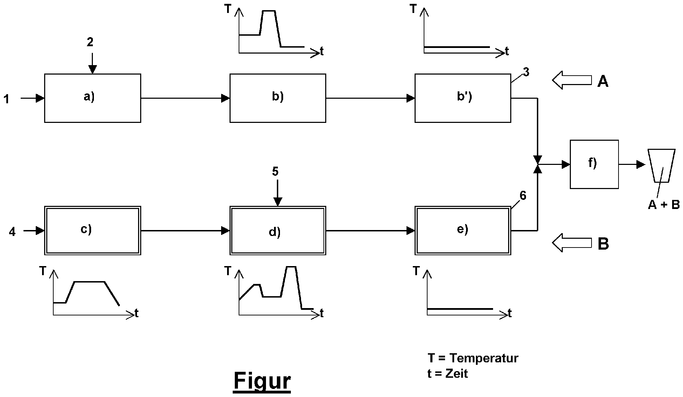

Wie aus der Figur auf einen Blick erkennbar, werden beim erfindungsgemässen Herstellungsverfahren zwei Komponenten mit unterschiedlichen Wärmeprozessen gesondert hergestellt und erst im letzten Schritt zusammengemischt und für den Endverbrauch abgefüllt.

In der Zeichnung erkennt man zwei parallel verlaufende Prozessstränge, wobei der obere Prozessstrang die Bildung einer Komponente A und der untere Prozessstrang die Bildung einer Komponente B symbolisiert. Oberhalb des oberen Prozessstranges sind jeweils vereinfachte Temperaturzeitdiagramme, die im Prozessstrang bei der Bildung der Komponente A wesentlich sind, dargestellt, während unterhalb des unteren Prozessstranges Temperaturzeitdiagramme dargestellt, die bei den entsprechenden Prozessschritte bei der Bildung der Komponente B eine Rolle spielen. Erst der letzte Prozessschritt ist für beide Komponenten gemeinsam.

Vorerst sei festgehalten, dass die rein schematische Figur keinen zeitlichen Ablaufs des gesamten Verfahrens darstellt, sondern dass lediglich die Reihenfolge der einzelnen Schritte bei der Herstellung der einzelnen Komponenten A und B korrekt wiedergegeben ist, hiermit aber nicht ein zeitgleiches Fortschreiten des Herstellungsprozesses beider Komponenten zeitgleich erfolgen soll. Dies ist allein schon deshalb nicht möglich, da die einzelnen Schritte des Herstellungsverfahrens für die verschiedenen Komponenten keineswegs denselben Zeitaufwand benötigen. Es ist somit durchaus möglich, erst die eine Komponente herzustellen und dann die andere Komponente, da beide Komponenten schliesslich in einen gekühlten Lagertank am Abschluss ihrer Herstellung gelangen und erst aus diesen Lagertanks zusammengemischt und abgefüllt werden.

Bei der Herstellung der Komponente A, die in der Figur im oberen Strang dargestellt ist, wird in einem ersten Schritt
a) im Fettgehalt standardisierte Milch 1 in einen Kessel gegeben und dieser Milch werden wunschgemässe Geschmackstoffe beigegeben. Unter geschmackgebenden Stoffen werden hier Stoffe aus der Gruppe
   - Zucker
   - Kakaopulver
   - Schokoladenpulver
   - Karamell
   - Zimt
   - Vanille
   und nach Wunsch auch weitere Geschmackstoffe beigegeben. Hierbei wird man bevorzugterweise möglichst diese Stoffe aus natürlichen Produkten verwenden. Beim Schokoladenpulver handelt es sich um Kakaopulver und Zucker, jedoch bevorzugterweise nicht unter Beigabe von Milchzucker. Die Aussage, dass der standardisierten Milch wunschgemässe Geschmackstoffe beigegeben werden, impliziert auch, dass keine Geschmackstoffe beigegeben werden müssen. Hier soll lediglich zum Ausdruck gebracht werden, dass im Falle dass Geschmackstoffe beigegeben werden sollen, dies im ersten Schritt a) erfolgen soll. Obwohl auch Kaffee also auch Kaffeeextrakte als geschmackgebende Stoffe angesehen werden können, sind diese hier auszuschliessen. Die im Milchgehalt standardisierte Milch mit dem wunschgemäss beigefügten Geschmackstoffen werden gründlich gemischt und das so erhaltene Milchmischgetränk bildet nun die Komponente A.
b) Diese Komponente wird in einem zweiten Schritt b) nun bei einer Temperatur von 120° bis 130° C pasteurisiert und unmittelbar danach auf eine Lagertemperatur von 6° bis 12° C abgekühlt. Die Pasteurisierung erfolgt mittels Kurzzeiterhitzung unter einer Minute, bevorzugterweise zwischen 3 und 20 Sekunden. Der Verfahrensschritt b) ist nach der Abkühlung beendet und die Komponente A wird danach in einem Steriltank 3 zwischengelagert. Diese Zwischenlagerung ist hier mit b' bezeichnet.
   Die zweite Komponente B, die in der Figur im unteren Prozessstrang dargestellt ist, beginnt mit dem Schritt
c) um ein haltbares, kaltes Milchkaffeemischgetränk zu erhalten, ist es erforderlich, einen Kaffee mit einem geringen Säuregehalt zu verwenden. Unter den Fachleute sind die Hydrokaffeesorten bekannt, die einen geringen Säuregehalt haben. Der Fachmann wird für diesen Prozess die entsprechend geeignete Rohkaffeesorten einsetzten.
   Ein wesentlicher Faktor bezüglich des Kaffeesäuregehaltes bildet die Röstung. Eine Röstung um 200° Celsius ergibt einen besonders tiefen Säuregehalt beim gerösteten Kaffee. Hierzu wird auf einen Artikel verwiesen von H. H. Balzer "Acids in coffee" publiziert in coffee-recent developments R. J. Clarke und O. G. Vitzhum eds publiziert bei Blackwell Science 2001. Erfahrungsgemäss gilt auch die Röstung als sogenannte Langzeitröstung in einem Trommelröster als besonders schonende Röstart. Bei den durchgeführten Versuchen hat man verschiedene Rohkaffeesorten bei einer Temperatur zwischen 180° und 220° C über eine Zeit von 15 und 25 Minuten geröstet. Besonders bevorzugte Ergebnisse ergaben sich bei einer Rösttemperatur zwischen 190° und 200° C. Hierbei wurde die optimale Röstzeit im Bereich zwischen 18 und 22 Minuten gefunden. Nach dieser Röstung des Rohkaffees 4 im Verfahrensschritt c) wird dann im Verfahrensschritt d)
d) dem gemahlenen und gerösteten Kaffee Wasser 5 beigegeben und dann wird mittels einem Brühprozess bei einer Temperatur von 85° bis 95° C ein Kaffeegetränk gebrüht. Dies kann in einem Durchlaufverfahren ähnlich einer Espressomaschine erfolgen. Die Austrittstemperatur des gebrühten Kaffees wird dabei im Bereich zwischen 75° bis 85° C geregelt. Der so gebrühte Kaffee wird nun kurzzeitig anschliessend an den Brühprozess pasteurisiert bei einer Temperatur zwischen 120° und 130° C während einer Zeit unter einer Minute, bevorzugt während einer Zeit von 2 bis 20 Sekunden. Dieser gebrühte und pasteurisierte Kaffee bildet nun die Komponente B. Diese Komponente B wird nun sogleich auf eine Lagertemperatur von 6° bis 12° C abgekühlt.

Die sogenannte Kaffeesäure, die 3,4 Dihydroxyzimtsäure, bildet die Hauptsäurekomponente im gebrühten Kaffee. Durch die entsprechende Verdünnung mit Wasser stellt man diesen Kaffeesäureanteil so ein, dass er weniger als 50mg/100ml, bevorzugterweise weniger als 35 mg/100ml und meist bevorzugt weniger als 30mg/100ml beträgt.

Dies lässt sich erzielen, indem man die Röstung des Kaffees wie zuvor beschrieben, durchführt und optimiert, wobei man den Gesamtsäureanteil im gerösteten Kaffee ermittelt. Die Röstung ist dann optimal, wenn der Anteil aller Säuren im gerösteten Kaffee maximal 3g/kg beträgt. Bevorzugterweise führt man die Röstung so durch, dass der Säureanteil weniger als 2,5 g/kg beträgt.

Diese beiden wie oben beschrieben hergestellten Komponenten A und B werden in gekühlten Steriltanks aufbewahrt und werden erst vor der Abfüllung zusammengeführt. Hierbei wird darauf geachtet, dass die Temperaturen beider Komponenten möglichst gleich sind. Optimalerweise ist die Temperaturdifferenz beider Komponenten bei der Zusammenführung und Vermischung kleiner als 3° C.

Gemäss dem oben beschriebenen Verfahren erhält man nun erstmals ein kaltes Kaffeegetränk, welches aus möglichst unbehandelten und naturbelassenen Lebensmittel besteht und somit ein möglichst natürliches Produkt ist. Ausser den Hauptkomponenten Milch 1, Kaffee 4 und den geschmackgebenden Aromenstoffe 2, bei denen ebenfalls bevorzugterweise Naturprodukte zum Einsatz kommen, sowie dem Wasser 5 enthält das fertige Produkt keine weiteren Zutaten, insbesondere keine Zutaten aus der Gruppe der Stabilisatoren, Emulgatoren, Säureregulatoren und Bindemittel. Durch die getrennte thermische Behandlung der Espresso- beziehungsweise Kaffeeflüssigkeit und der Milch mit den eventuell beigegebenen geschmackgebenden Stoffen ist es nicht mehr erforderlich, vor der thermischen Behandlung die Milchproteine gegen die Kaffeesäure zu stabilisieren. Nach der Sterilisation der beiden Komponenten A und B erfolgt die gesamte weitere Verarbeitung aseptisch. Damit erhält man ein frisches Kaffeegetränk, welches in den Kühlregalen der Vertreiber bis zu sechs Wochen lagerfähig bleibt.

Das aus diesem Prozess gewonnene kalte Kaffeemilchgetränk wird bevorzugt in versiegelten Trinkbecher angeboten.

### Bezugszeichenliste:

1 Milch
2 Geschmackgebende Stoffe
3 Steril
4 Rohkaffee
5 Wasser

## Patentansprüche

1. Verfahren zur Herstellung von kalten Kaffeemilchgetränken, bestehend aus gebrühtem Kaffee und Milch und geschmackgebenden Stoffen **gekennzeichnet durch** folgende Schritte:
a) im Fettgehalt standardisierter Milch werden wunschgemässe Geschmackstoffe beigegeben, mit Ausnahme von Kaffee, und zu einem Milchmischgetränk gemischt;
b) das Milchmischgetränk aus Schritt a) als Komponente A wird bei einer Temperatur von 120°bis 130°C pasteurisiert und unmittelbar danach auf eine Lagertemperatur von 6°bis 12°C abgekühlt;
c) gewünschte Rohkaffeesorten beziehungsweise Kaffeesortenmischungen werden bei einer Temperatur zwischen 180°C und 220°C, bevorzugt zwischen 190°C und 200°C geröstet und gemahlen und anschliessend
d) in einem Brühprozess bei 85°C bis 95°C zu einem Kaffeegetränk gebrüht und bei einer Austrittstemperatur von 75°C bis 85°C entnommen und danach bei einer Temperatur zwischen 120°C und 130°C während einer Zeit unter einer Minute pasteurisiert;
e) unmittelbar anschliessend wird das Kaffeegetränk der Schritte c) und d) als Komponente B auf eine Lagertemperatur von 6°bis 12°C abgekühlt;
f) unmittelbar vor einem Abfüllprozess wird das Milchmischgetränk und das Kaffeegetränk zusammen geführt in einem gewünschten Mischverhältnis von Komponente A zu Komponente B.

2. Verfahren nach Anspruch 1, **dadurch gekennzeichnet, dass** der Komponente A aus Schritt a) geschmackgebende Stoffe aus der Gruppe von:
- Zucker
- Kakaopulver
- Schokoladenpulver
- Karamell
- Zimt
- Vanille
beigegeben wird.

3. Verfahren nach Anspruch 1, **dadurch gekennzeichnet, dass** die beiden Komponenten A und B bei Lagertemperatur gemäss den Schritten b) und e) erfolgt.

4. Verfahren nach Anspruch 3, **dadurch gekennzeichnet, dass** die beiden zusammen gemischten Komponenten A und B kaltaspetisch abgemischt werden.

5. Verfahren nach Anspruch 1, **dadurch gekennzeichnet, dass** die nach dem Schritt b) vorliegende, auf Lagertemperatur gekühlte Komponente A in einem Steriltank gelagert wird.

6. Verfahren nach Anspruch 1, **dadurch gekennzeichnet, dass** die Röstung nach Schritt c) mit einer Röstzeit zwischen 15 und 25 Minuten bevorzugt mit einer Röstzeit zwischen 18 und 22 Minuten erfolgt.

7. Verfahren nach Anspruch 6, **dadurch gekennzeichnet, dass** die Röstung in einem Trommelröster erfolgt.

8. Verfahren nach Anspruch 1, **dadurch gekennzeichnet, dass** die beiden Komponenten A und B aseptisch in einer geschlossenen Anlage gemischt werden.

9. Verfahren nach Anspruch 6, **dadurch gekennzeichnet, dass** die Komponente B so eingestellt wird, dass der Gehalt an 3,4 Dihydroxyzimtsäure weniger als 50mg/100ml, bevorzugterweise weniger als 35mg/100ml meist bevorzugt weniger als 30mg/100ml beträgt.

10. Verfahren nach Anspruch 6, **dadurch gekennzeichnet, dass** der Kaffee so geröstet wird, dass der gesamte Säureanteil im gerösteten Kaffee maximal 3g/kg, bevorzugt maximal 2g/kg, beträgt.

11. Verfahren nach Anspruch 1, **dadurch gekennzeichnet, dass** das Mischverhältnis der Komponente A und Komponente B zwischen 2 zu 1 und 7 zu 1 beträgt.

12. Verfahren nach Anspruch 1, **dadurch gekennzeichnet, dass** das Milchmischgetränk als Komponente A im Schritt b) während einer Zeit von unter einer Minute, bevorzugterweise während 3 - 20 Sekunden pasteurisiert wird.

13. Verfahren nach Anspruch 1, **dadurch gekennzeichnet, dass** der gebrühte Kaffee im Schritt d) während einer Zeit von bevorzugt 2 bis 20 Sekunden pasteurisiert wird.

14. Verfahren nach Anspruch 1, **dadurch gekennzeichnet, dass** die Temperaturdifferenz der beiden Komponenten A und B beim Zusammenführen weniger als 3°C beträgt.

15. Kaffeemilchgetränk, wobei dieses nach dem Verfahren nach Anspruch 1 gefertigt und in einem versiegelten Trinkbecher abgefüllt ist, wobei das Kaffeemilchgetränk keine Zutaten aus der Gruppe der Stabilisatoren, Emulgatoren, Säureregulatoren und Bindemittel enthält.

## Claims

1. A method for the preparation of cold coffee milk beverages, consisting of brewed coffee and milk and flavoring agents, **characterized by** the following steps:
a) desired flavoring agents are added to milk with a standardized fat content, with the exception of coffee, and are mixed into a mixed milk beverage;
b) the mixed milk beverage from step a) as component A is pasteurized at a temperature of between 120° and 130 °C, and is cooled down immediately thereafter to a storage temperature of between 6° and 12 °C;
c) desired green coffee types or coffee type mixtures, respectively, are roasted and ground at a temperature of between 180° and 220 °C, preferably between 190 °C and 200 °C, and are subsequently
d) brewed into a coffee beverage in a brewing process at between 85 °C and 95 °C, and are removed at an outlet temperature of between 75 °C and 85 °C, and are then pasteurized at a temperature of between 120 °C and 130 °C for a time period of less than one minute;
e) immediately afterwards, the coffee beverage of steps c) and d) as component B is cooled down to a storage temperature of between 6° and 12 °C;
f) immediately prior to a filling process, the mixed milk beverage and the coffee beverage are brought together at a desired mixing ratio of component A to component B.

2. The method according to claim 1, **characterized in that** flavoring agents from the group of:
- sugar
- cocoa powder
- chocolate powder
- caramel
- cinnamon
- vanilla
is added to the component A from step a).

3. The method according to claim 1, **characterized in that** the two components A and B takes place at storage temperature according to steps b) and e).

4. The method according to claim 3, **characterized in that** the two components A and B, which are mixed together, are mixed cold-aseptically.

5. The method according to claim 1, **characterized in that** the component A, which is present after step b) and which has been cooled to storage temperature, is stored in a sterile tank.

6. The method according to claim 1, **characterized in that** the roasting according to step c) takes place with a roasting time of between 15 and 25 minutes, preferably with a roasting time of between 18 and 22 minutes.

7. The method according to claim 6, **characterized in that** the roasting takes place in a drum roaster.

8. The method according to claim 1, **characterized in that** the two components A and B are mixed aseptically in a closed system.

9. The method according to claim 6, **characterized in that** the component B is set in such a way that the content of 3,4 dihydroxy cinnamic acid is less than 50mg/100ml, preferably less than 35mg/100ml, most preferably less than 30mg/100ml.

10. The method according to claim 6, **characterized in that** the coffee is roasted in such a way that the entire acidic part in the roasted coffee is maximally 3g/kg, preferably maximally 2g/kg.

11. The method according to claim 1, **characterized in that** the mixing ratio of the component A and component B is between 2 to 1 and 7 to 1.

12. The method according to claim 1, **characterized in that** the mixed milk beverage as component A is pasteurized in step b) for a time period of less than one minute, preferably for 3 - 20 seconds.

13. The method according to claim 1, **characterized in that** the brewed coffee is pasteurized in step d) for a time period of preferably 2 to 20 seconds.

14. The method according to claim 1, **characterized in that** the temperature difference of the two components A and B in response to bringing them together is less than 3 °C.

15. A coffee milk beverage, wherein the latter is prepared according to the method according to claim 1, and is filled into a sealed drinking cup, wherein the coffee milk beverage does not contain any ingredients from the group of stabilizers, emulsifiers, acidity regulators and binders.

## Revendications

1. Procédé de préparation de boissons lactées au café, composées de café infusé et de lait et d'agents aromatisants, **caractérisé par** les étapes suivantes :
a) à du lait standardisé en matière de teneur en matière grasses, sont ajoutés selon les souhaits des aromatisants, à l'exception de café et le tout est mélangé en une boisson lactée mixte ;
b) la boisson lactée mixte issue de l'étape a), à titre de composant A est pasteurisée à une température de 120 °C à 130 °C et directement par la suite, refroidie à une température de stockage de 6 °C à 12 °C ;
c) des variétés souhaitées de café vert, respectivement des mélanges de variétés de café sont torréfiés à une température comprise entre 180 °C et 220 °C, de préférence entre 190 °C et 200 °C et moulus et par la suite,
d) dans un processus d'infusion à de 85 °C à 95 °C, ils sont infusés en une boisson au café et prélevés à une température de sortie de 75 °C à 85 °C et pasteurisés ensuite à une température comprise entre 120 °C et 130 °C pendant une durée inférieure à une minute ;
e) directement par la suite, à titre de composant B, la boisson au café issue des étapes c) et d) est refroidie à une température de stockage de 6 °C à 12°C ;
f) directement avant un processus de remplissage, on réunit la boisson lactée mixte et la boisson au café selon un rapport de mélange du composant A au composant B.

2. Procédé selon la revendication 1, **caractérisé en ce qu'**il est ajouté au composant A issu de l'étape a) des agents aromatisants du groupe comprenant :
- le sucre
- la poudre de cacao
- la poudre de chocolat
- le caramel
- la cannelle
- la vanille.

3. Procédé selon la revendication 1, **caractérisé en ce que** la réunion des deux composants A et B s'effectue à température de stockage, selon les étapes b) et e) .

4. Procédé selon la revendication 3, **caractérisé en ce que** les deux composants A et B sont mélangés l'un à l'autre sous aseptisation par le froid.

5. Procédé selon la revendication 1, **caractérisé en ce que** le composant A présent après l'étape b), refroidi à température de stockage est stocké dans un réservoir stérile.

6. Procédé selon la revendication 1, **caractérisé en ce que** la torréfaction selon l'étape c) s'effectue pendant un temps de torréfaction compris entre 15 et 25 minutes, de préférence pendant un temps de torréfaction compris entre 18 et 22 minutes.

7. Procédé selon la revendication 6, **caractérisé en ce que** la torréfaction s'effectue dans un torréfacteur à tambour.

8. Procédé selon la revendication 1, **caractérisé en ce que** les deux composants A et B sont mélangés sous conditions aseptiques, dans une installation fermée.

9. Procédé selon la revendication 6 **caractérisé en ce que** le composant B est réglé de telle sorte que la teneur en acide 3,4 dihydroxycinnamique soit inférieure à 50 mg/100 ml, de manière préférentielle, inférieure à 35 mg/100 ml, de manière la plus préférentielle, inférieure à 30 mg/100 ml.

10. Procédé selon la revendication 6, **caractérisé en ce que** le café est torréfié de telle sorte que la part totale d'acide dans le café torréfié soit d'un maximum de 3 g/kg, de préférence d'un maximum de 2 g/kg.

11. Procédé selon la revendication 1, **caractérisé en ce que** le rapport de mélange du composant A au composant B est compris entre 2 à 1 et 7 à 1.

12. Procédé selon la revendication 1, **caractérisé en ce qu'**au titre de composant A, dans l'étape b), la boisson lactée mixte est pasteurisée pendant une durée de moins d'une minute, de préférence pendant de 3 - 20 secondes.

13. Procédé selon la revendication 1, **caractérisé en ce que** dans l'étape d), le café infusé est pasteurisé pendant une durée de 2 à 20 secondes de préférence.

14. Procédé selon la revendication 1, **caractérisé en ce que** la température différentielle des deux composants A et B lors de leur réunion est inférieure à 3 °C.

15. Boisson lactée au café, celle-ci étant préparée d'après le procédé selon la revendication 1 et versée dans un gobelet scellé, sachant que la boisson lactée au café ne comprend aucun ingrédient du groupe des stabilisateurs, des émulsifiants, des régulateurs d'acidité et des agents liants.
